# EUROPEAN PATENT SPECIFICATION

(11) **EP 3 499 107 B1**
(45) Date of publication and mention of the grant of the patent: **30.12.2020**
(21) Application number: 19151750.7
(22) Date of filing: 11.10.2013
(51) Int. Cl.: F16L 55/48, H01H 1/00, H01H 23/00, B08B 9/027, F16J 15/02, G01D 13/00, F16J 15/06

(54) **PIPELINE PIG SIGNAL TRIGGER CAVITY SEAL**
HOHLKAMMERDICHTUNG FÜR ROHRMOLCHSIGNALAUSLÖSER
JOINT À CAVITÉ DE DÉCLENCHEMENT DE SIGNAL DE RACLEURS DE PIPELINE

(30) Priority: 06.11.2012 US 201213669989
(43) Date of publication of application: 19.06.2019
(62) Document number(s) of the earlier application(s) in accordance with Art. 76 EPC: 13188397.7 / 2 746 638
(73) Proprietor: TDW Delaware, Inc., Wilmington, Delaware 19801 (US)
(72) Inventor: Klemm, Nathan, Tulsa, OK 74112 (US); Logan, Matt, Broken Arrow, OK 74014 (US); Vaughn, Michael, Ketchum, OK 74349 (US)
(74) Representative: inCompass IP Europe Limited

(56) References cited:
- US-A- 4 658 646
- US-A- 5 263 220
- US-A- 5 279 251
- US-A1- 2008 276 859

## Description

### Background

This invention relates generally to signals mounted on pipelines and used to indicate the passage of pipeline pigs. More particularly, the invention relates to pipeline pig signals that make use of magnet arrangements to trigger the release of a spring-loaded indicator flag. This type of pig signal is commonly referred to as a magnetic intrusive pig signal. An example of this type of signal is described in US 7,861,665.

A magnetic intrusive pig signal typically includes a plug assembly and nipple combination, or a plug assembly and flange combination, that places the nipple in fluid communication with the interior of the pipeline. An o-ring or other equivalent sealing means is used to contain the pipeline pressure. Located within a cavity of the plug assembly is a trigger mechanism having polar opposite magnets. The trigger mechanism is in communication with the release mechanism of an indicator assembly that includes a flag or other device that indicates the passage of a pipeline pig. As a pipeline pig moves along the interior of the pipeline and past the magnetic intrusive pig signal, the pig urges against the trigger. This causes the lower magnet of the trigger mechanism to travel upward toward the upper magnet. As the upper magnet is repelled by the lower magnet, its mounting shaft urges against a release mechanism which activates the flag of the indicator assembly.

Although magnetic intrusive pig signals provide a number of advantages, this type of signal can be negatively affected from time-to-time by ferromagnetic debris such as metal flakes which are attracted to the lower repulsive magnet of the trigger mechanism. The debris can cause the trigger mechanism to jam because of the close fit and tolerances within the trigger cavity. Additionally, heavy waxy sludge sometimes enters the cavity and causes the trigger mechanism to jam. This can be particularly troublesome in the magnet area of the trigger cavity.

US5279251 discloses a pipeline pig signal having a trigger in communication with an interior space of a pipeline, the pipeline pig signal comprising: a trigger cavity internal to the pipeline pig signal and housing at least a portion of the trigger; a sealing means located toward an end of the trigger cavity and above the housed portion of the trigger, the sealing means arranged to prevent the debris from entering a portion of the trigger cavity located above the sealing means.

US5263220 discloses a pipeline pig signal in which a seal sleeve provides pressure isolation so that fluid in the pipeline does not penetrate into the tool and seal rings prevent leakage of pipeline fluid past the seal sleeve.

### General

A pipeline pig signal made according to this invention has a trigger cavity internal to the signal which houses at least a portion of a trigger that protrudes into an interior space of the pipeline. A sealing means is located toward a lower end of the trigger cavity and above the housed portion of the trigger. The sealing means prevents pipeline debris from entering a portion of the trigger cavity located above the sealing means.

The sealing means move between a first sealing position and a second sealing position in response to the trigger moving between a non-triggered and triggered position. This movement comes in the form of flexing to maintain fluid containment in the magnet area portion of the trigger cavity. The sealing means may be a polymer boot.

Objects of this invention are to (1) prevent ferromagnetic debris, dirt, heavy waxy sludge, and other contaminants from entering the magnet area of magnetic intrusive pig signal's trigger cavity; and (2) provide a sealing means that can be installed in and used to retrofit existing pig signal designs.

The invention provides a magnet housed in the trigger cavity and includes at least a portion of a trigger sealing means located toward a lower end of the trigger cavity and above the housed portion of the trigger. The sealing means houses a pre-injected incompressible fluid that surrounds the magnet and is arranged to prevent pipeline debris from coming into contact with the magnet.

The invention is defined by the appended claims.

### Brief Description of the Drawings

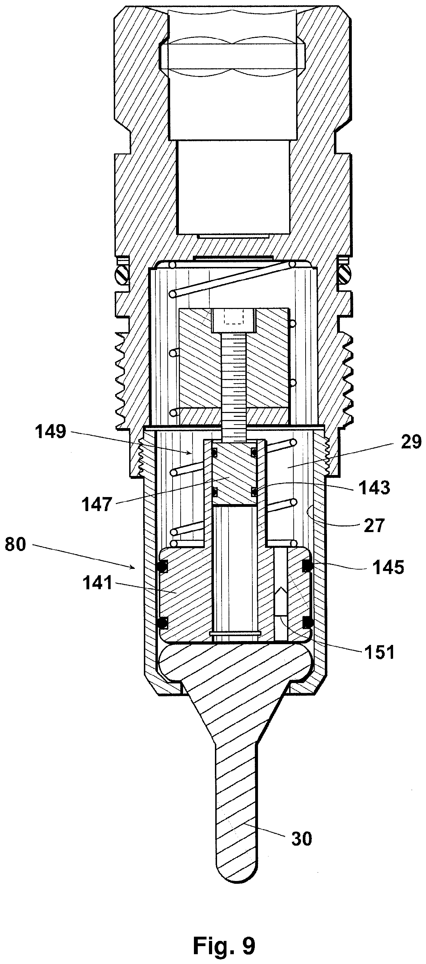

FIG. 1 is a cross-section view of a pig signal which includes a preferred embodiment of a trigger cavity sealing means made according to this invention. The sealing means includes a rubber boot having convolutes which provides containment of a pre-injected, incompressible fluid that prevents any pipeline product, debris and sludge from entering the magnet area of the trigger cavity Figure 1 is a pipeline pig signal device according to the present invention. Figures 2A, 2B, and 3 to 9 show devices not according to the invention.
FIG. 2A is a cross-section view of another pig signal made according to this invention, shown in its relaxed or non-triggered state. The sealing means includes a sliding piston.
FIG. 2B is a cross-section view of the pig signal of FIG. 2A in its triggered state. The sliding piston moves downward in response to the signal being triggered.
FIG. 3 is a front elevation view of yet another pig signal device.
FIG. 4 is a cross-section view of the pig signal of FIG. 3 taken along section line 5-5. The sealing means includes a sliding shelf design.
FIG. 5 is a front elevation view of the sliding shelf of FIG. 4.
FIG. 6 is a cross-section view of the sliding shelf of FIG. 4 taken along section line 8-8 of FIG. 5.
FIG. 7 is an isometric view of the magnet holder of the pig signal of FIG. 3.
FIG. 8 is a cross-section view of the magnet holder of FIG. 3 taken along section line 10-10 of FIG. 7.
FIG. 9 is still yet another pig signal device.

**Elements and element numbering used in the drawings and detailed description**

| | | | |
|---|---|---|---|
| 20 | Pipeline pig signal | 91 | Filter pack |
| 22 | Indicator assembly | 93 | Filtering material |
| 24 | Plug assembly | 95 | Plastic washers |
| 26 | Nipple/lower body | 97 | Flow-through holes |
| 27 | Inner wall of 29 | 101 | Sliding piston |
| 28 | Internal cavity/trigger cavity | 103 | Shaft |
| 29 | Magnet area | 105 | Magnet holder |
| 30 | Trigger | 107 | Inner O-ring |
| 31 | Lower end | 109 | Outer O-ring |
| 32 | First magnet | 111 | Bleed screw |
| 33 | O-ring | 121 | Floating shelf |
| 35 | Plunger | 123 | Wear ring |
| 37 | Lower end | 125 | Wear ring |
| 38 | Groove | 127 | Inner O-ring |
| 39 | Wall of 35 | 129 | Outer O-ring |
| 40 | Flag | 131 | O-ring washer |
| 44 | Indicator assembly body | 133 | Outer circumferential surface |
| 48 | Second O-ring | 135 | O-ring |
| 50 | Set screws | 137 | Ring back-up |
| 56 | Second magnet | 141 | Sliding piston |
| 57 | Upper end | 143 | Inner O-ring |
| 71 | Shaft | 145 | Outer O-ring |
| 73 | Magnet holder | 147 | Shaft |
| 80 | Sealing means | 149 | Magnet holder |
| 81 | Seal | 151 | Bleed screw |
| 83 | Upper end | | |

### Detailed Description

This invention includes a sealing means which prevents ferromagnetic debris, dirt, heavy waxy sludge and other contaminants from entering the magnet area of the signal.

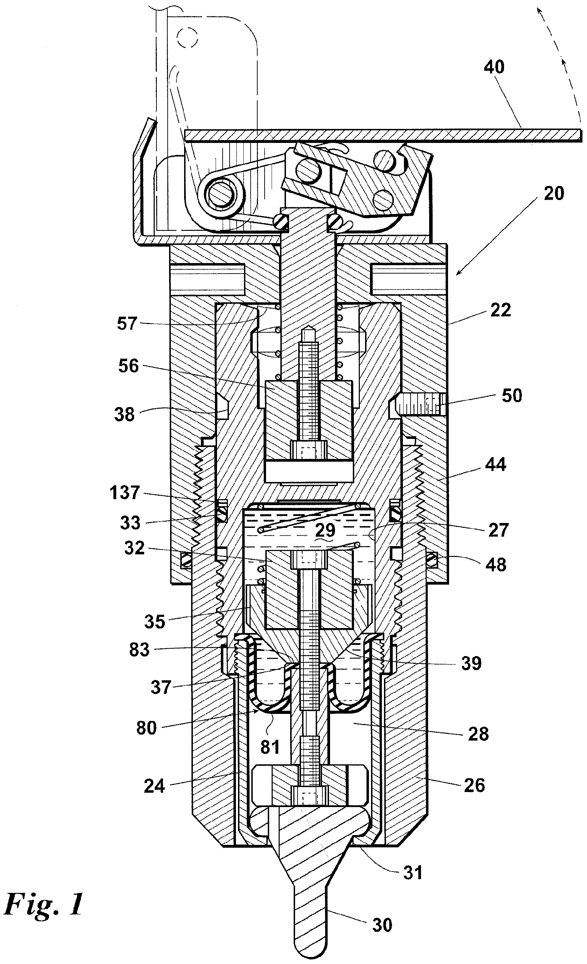

Referring to the drawings and first to FIG. 1, a pipeline pig signal 20 is illustrated which includes an indicator assembly 22 received by and releaseably secured to a plug assembly 24. The pig signal is mounted to a pipeline and the indicator assembly 22 positioned in a desired clock orientation relative to the plug assembly 24 so that flag 40, when released, is visible to a pipeline operator. Set screws 50 engage a groove 38 and, when tightened against the groove, hold signal 20 in the desired orientation. (Each device described herein provides this adjustable orientation means).

Plug assembly 24 receives a nipple or lower body 26 which, in turn, receives a trigger 30. Once pig signal 20 is secured to a pipeline, trigger 30 extends into the interior of the pipeline, thereby placing the interior cavity 28 of the lower body 26 in fluid communication with the interior of the pipeline. Pipeline pressure within the plug assembly 24 may be sealed off using an O-ring 33 or equivalent sealing means. O-ring 33 can include a back-up ring 137, preferably made of a TEFLON or equivalent material. A second O-ring 48 may be included which provides a seal between the nipple 26 and indicator assembly body 44 to prevent moisture and debris from entering the interior of the indicator assembly body 44 and causing corrosion or contamination of the release mechanism for flag 40. Alternatively, a breathable seal may be used in place of O-ring 48.

Trigger 30 resides within the internal cavity 28 of lower body 26. This internal cavity 28, which is fluid filled and may also be referred to as the trigger cavity 28, has a first magnet 32 located toward its lower end 31. A second magnet 56 is located towards the upper end 57 of the trigger 30. The area above first magnet 32 and below second magnet 56 is, for descriptive purposes, the magnet area 29 of trigger cavity 28. The magnets 32, 56 are opposite in polarity to one another.

As the pig moves along the pipeline and past the pipeline pig signal 20, the pig urges against the trigger 30 and causes the trigger 30 to move in axially upward within the plug assembly 24 and, therefore, the first magnet 32 to move between a first and second position toward the second magnet 56. As first magnet 32 moves toward second magnet 56, the second magnet 56 moves between a first and second position, upward and away from the first magnet 32. As the second magnet 56 continues its upward travel, flag 40 is released and pivoted into its activated position.

To prevent pipeline product, debris, and sludge from entering the trigger cavity 28, and particularly from entering the magnet area 29, sealing means 80 are provided toward the lower end 31 of the trigger cavity 28. Sealing means 80 may be a seal 81 which contains a pre-injected fluid (incompressible to balance pipeline pressure). Seal 81 prevents any pipeline product, debris and sludge from entering the magnet area 29 of the trigger cavity 28.

Seal 81 is preferably complementary in shape to the plunger 35 that moves the first magnet between the first and second position when a pipeline pig encounters trigger 30. In a preferred embodiment, plunger 35 is a frusto-conical shaped plunger whose lower end 37 urges against the opposing upper end 83 of seal 81, causing seal 81 to flex in sealing engagement with the opposing interior wall surface 27 of the trigger cavity 28 and the wall 39 of plunger 35. This flexing helps to maintain fluid containment in the magnet area 29. Seal 81 remains in sealing engagement as the plunger 35 moves between the first and second positions. No pipeline product, debris or sludge can pass through seal 81 and enter the magnet area 29. In another embodiment, seal 81 is a polymer or rubber boot with convolutes.

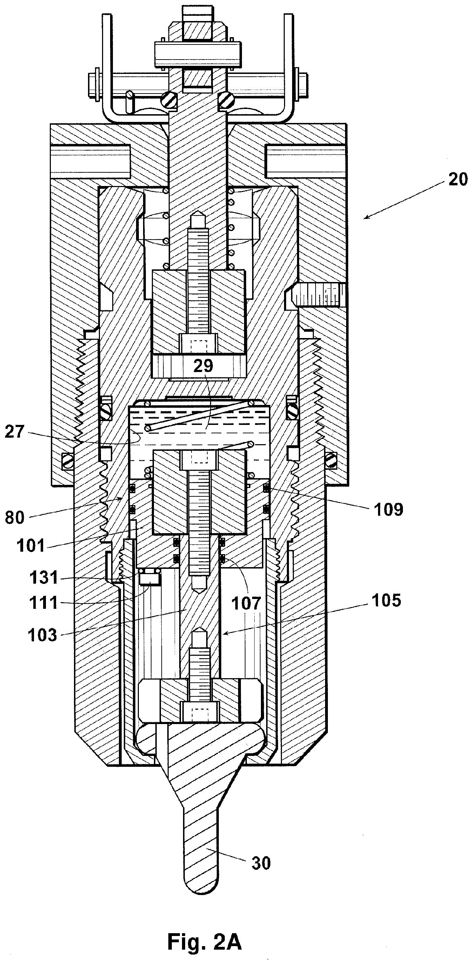

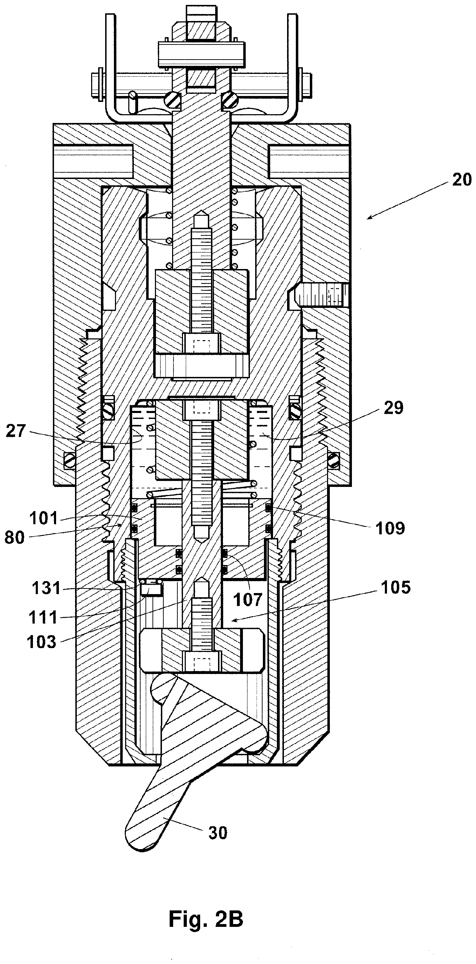

FIGS. 2A & B illustrate yet another device with sealing means 80, namely, a sliding piston 101. Sliding piston 101 is arranged about the shaft 103 of magnet holder 105. When pig signal 20 is triggered, the piston 101 slides downward as the magnet 32 moves upward. A pair of inner and outer O-rings 107, 109 provide, respectively, sealing means against the shaft 103 and the inner wall 27 of the fluid-filled magnet area 29. A bleed screw 111 allows insertion of fluid in area 29. The magnet area 29 is pre-filled with fluid and bleed screw 111 is used to bleed off the fluid until it reaches a desired level.

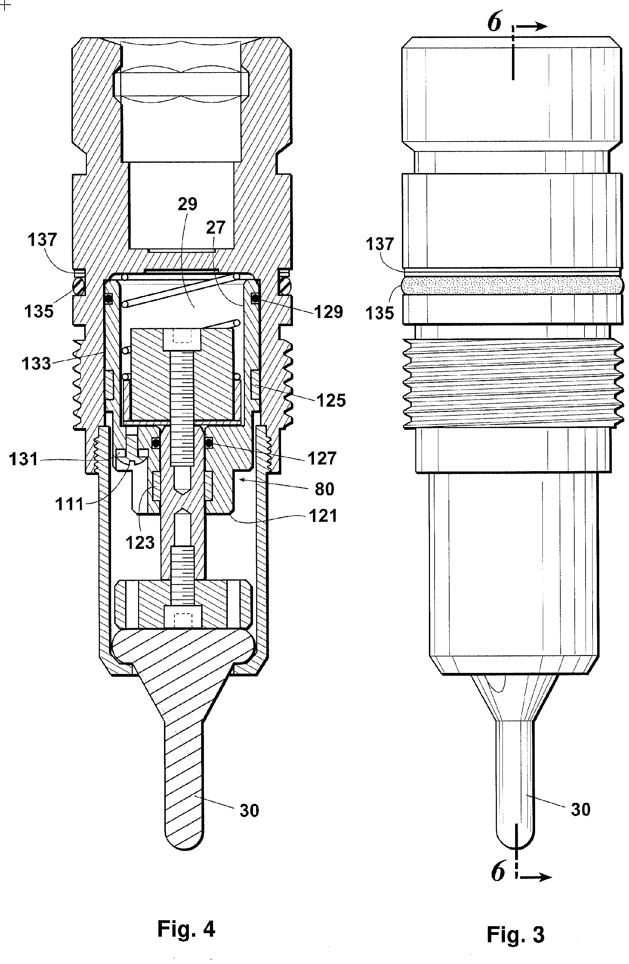

Referring now to FIGS. 3 to 8, sealing means 80 is a floating shelf 121. The shelf 121 includes an external O-ring 135 with optional ring back-up 137 preferably made of TEFLON or equivalent material. A wear ring 123 is positioned to surround the shaft 103 of magnet holder 105 and a wear ring 125 is positioned about the outer circumferential surface 133 of shelf 121. An inner O-ring 127 provides sealing means between shaft 103 shelf 121. An outer O-ring 129 provides sealing means between shelf 121 and the inner wall 27 of fluid-filled magnet area 29. When pig signal 20 is triggered, the floating shelf 121 moves downward as the magnet 32 moves upward. A bleed screw 111 controls the amount of fluid in area 29. An O-ring washer 131 provides sealing means for the screw 111.

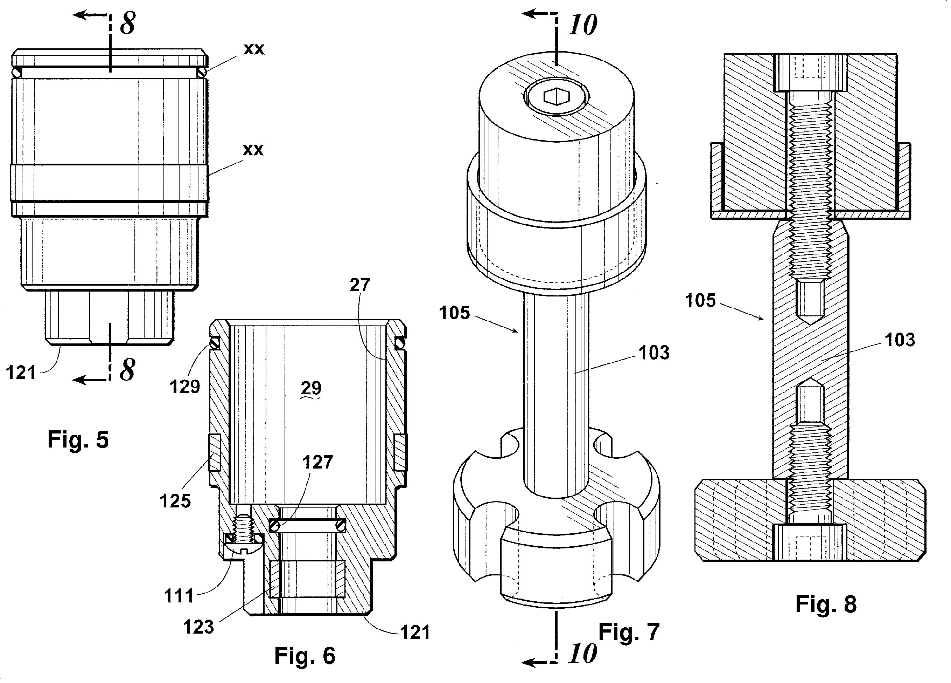

Last, FIG. 8 illustrates another device in which sealing means 80 is an inverted sliding piston 141. As with the other sliding designs, when pig signal 20 is triggered, piston 141 moves downward as the magnet 32 moves upward. A pair of inner and outer O-rings 143, 145 provide, respectively, sealing means against the shaft 147 of the magnet holder 149 and the inner wall 27 of the fluid-filled magnet area 29. A bleed screw 151 operates similar to that of bleed screw 111.

The scope of the invention is defined by the following claims.

## Claims

1. A pipeline pig signal device comprising:
a trigger cavity (28) internal to the pipeline pig signal device (20) and housing a magnet (32) and at least a portion of a trigger (30) and a sealing means (80) and a pre-injected incompressible fluid;
the sealing means (80) located toward a lower end of the trigger cavity (28) and above the housed portion of the trigger (30), the pre-injected incompressible fluid surrounds the magnet (32), the sealing means providing for flexing, the sealing means (80) arranged to prevent pipeline debris from coming into contact with the pre-injected incompressible fluid and magnet (32) by preventing pipeline debris from entering a portion of the trigger cavity (28) located above the sealing means (80).

2. A pipeline pig signal device according to claim 1 further comprising the sealing means (80) arranged for flexing between a first sealing position and a second sealing position in response to trigger movement between a non-triggered and triggered position.

3. A pipeline pig signal device according to claim 1 comprising a second magnet (56) located toward the upper end of the trigger cavity (28).

4. A pipeline pig signal device according to claim 1 further comprising the sealing (80) means being a rubber boot.

5. A pipeline pig signal device according to claim 1 further comprising the sealing means (80) being a rubber boot with convolutes.

## Patentansprüche

1. Leitungsmolch-Signalvorrichtung, umfassend:
einen Auslöserhohlraum (28) in der Leitungsmolch-Signalvorrichtung (20), der einen Magnet (32) und mindestens einen Abschnitt eines Auslösers (30) und ein Dichtmittel (80) und eine voreingespritzte nicht komprimierbare Flüssigkeit aufnimmt;
wobei das Dichtmittel (80) zum unteren Ende des Auslöserhohlraums (28) und über dem aufgenommenen Abschnitt des Auslösers (30) angeordnet ist, die voreingespritzte nicht komprimierbare Flüssigkeit den Magneten (32) umgibt, das Dichtmittel Biegung ermöglicht, das Dichtmittel (80) angeordnet ist zu verhindern, dass Leitungsverunreinigungen mit dem voreingespritzten nicht komprimierbaren Fluid und dem Magneten (32) in Kontakt kommen, indem es verhindert, dass Leitungsverunreinigungen in einen Abschnitt des Auslöserhohlraums (28) eintreten, der über dem Dichtmittel (80) angeordnet ist.

2. Leitungsmolch-Signalvorrichtung nach Anspruch 1, ferner umfassend das Dichtmittel (80), das für Biegung zwischen einer ersten Dichtposition und einer zweiten Dichtposition in Reaktion auf eine Auslöserbewegung zwischen einer nicht ausgelösten und einer ausgelösten Position angeordnet ist.

3. Leitungsmolch-Signalvorrichtung nach Anspruch 1, umfassend einen zweiten Magneten (56), der sich zum oberen Ende des Auslöserhohlraums (28) befindet.

4. Leitungsmolch-Signalvorrichtung nach Anspruch 1, ferner umfassend das Dichtmittel (80), das eine Gummimanschette ist.

5. Leitungsmolch-Signalvorrichtung nach Anspruch 1, ferner umfassend das Dichtmittel (80), das eine Gummimanschette mit Wicklungen ist.

## Revendications

1. Dispositif de signalisation de racleur de pipeline comprenant :
une cavité de déclenchement (28) à l'intérieur du dispositif de signalisation de racleur de pipeline (20) et contenant un aimant (32) et au moins une partie d'un dispositif de déclenchement (30) et un moyen d'obturation (80) et un fluide incompressible préinjecté ;
le moyen d'obturation (80) situé vers une extrémité inférieure de la cavité de déclenchement (28) et au-dessus d'une partie contenue du dispositif de déclenchement (30), le fluide incompressible préinjecté entoure l'aimant (32), le moyen d'obturation permettant la flexion, le moyen d'obturation (80) étant agencé pour empêcher les débris du pipeline d'entrer en contact avec le fluide incompressible préinjecté et l'aimant (32) en empêchant les débris du pipeline d'entrer dans une partie de la cavité de déclenchement (28) située au-dessus du moyen d'obturation (80).

2. Dispositif de signalisation de racleur de pipeline selon la revendication 1, comprenant en outre le moyen d'obturation (80) disposé pour être en flexion entre une première position d'obturation et une deuxième position d'obturation en réponse au mouvement du dispositif de déclenchement entre une position non déclenchée et une position déclenchée.

3. Dispositif de signalisation de racleur de pipeline selon la revendication 1 comprenant un deuxième aimant (56) situé vers l'extrémité supérieure de la cavité de déclenchement (28).

4. Dispositif de signalisation de racleur de pipeline selon la revendication 1, comprenant en outre le moyen d'obturation (80) sous la forme d'une enveloppe de caoutchouc.

5. Dispositif de signalisation de racleur de pipeline selon la revendication 1, comprenant en outre le moyen d'obturation (80) sous la forme d'une enveloppe de caoutchouc avec des enroulements.
